# EUROPÄISCHE PATENTSCHRIFT

(11) **EP 2 205 942 B1**
(45) Veröffentlichungstag und Bekanntmachung des Hinweises auf die Patenterteilung: **26.06.2013**
(21) Anmeldenummer: 08804117.3
(22) Anmeldetag: 12.09.2008
(51) Int. Cl.: G01C 21/34, G01C 21/36

(54) **NAVIGATIONSSYSTEM UND VERFAHREN ZUR ROUTENERMITTLUNG**
NAVIGATION SYSTEM AND METHOD FOR ROUTE PLANNING
SYSTÈME DE NAVIGATION ET PROCÉDÉ DE DÉTERMINATION D'ITINÉRAIRE

(30) Priorität: 31.10.2007 DE 102007052155
(43) Veröffentlichungstag der Anmeldung: 14.07.2010
(73) Patentinhaber: Robert Bosch GmbH, 70442 Stuttgart (DE)
(72) Erfinder: FISCHER, Kai, 31199 Diekholzen (DE); VOGEL, Andreas, 31139 Hildesheim (DE)
(86) Internationale Anmeldenummer: PCT/EP2008/062154
(87) Internationale Veröffentlichungsnummer: WO 2009/056388

(56) Entgegenhaltungen:
- US-A1- 2004 111 215
- US-A1- 2007 239 354
- US-B1- 6 542 812
- US-B1- 6 711 498

## Beschreibung

### TECHNISCHES GEBIET

Die Erfindung betrifft ein Navigationssystem mit einer Eingabevorrichtung.

### STAND DER TECHNIK

Navigationssysteme oder Navigationsgeräte werden unter anderem in Kraftfahrzeuge serienmäßig eingebaut oder sind als mobile Geräte von einem Nutzer mitführbar. Navigationssysteme umfassen im Wesentlichen eine Positionsbestimmungseinrichtung, die mit Hilfe von Signalen, die von GPS-Satteliten oder zukünftig den Galileo-Satteliten ausgesandt werden, ihre Position im Raum in an sich bekannter Weise bestimmen. Weiterhin ist eine Zielführungseinrichtung vorhanden, die ausgehend von dieser Position eine Route zu einem vom Nutzer des Navigationssystems vorgegebenen Zielpunkt errechnet und entsprechende Richtungshinweise optisch und/oder akustisch ausgibt. Hierfür wird für eine Zielführung für ein Kraftfahrzeug auf Informationen bezüglich des Strecken- und Wegenetzes des zu befahrenden Gebiets zurückgegriffen, die beispielsweise auf einer austauschbaren CD-Rom oder DVD hinterlegt sind. Bei der Ermittlung einer Fahrtroute können vom Nutzer auch verschiedene Streckenarten wie Mautstrecken, Autobahnen oder dergleichen ausgeschlossen werden. Weiterhin kann eine schnellste und/oder kürzeste Fahrtroute zugrunde gelegt werden.

Schließlich ist es bekannt, dass Zwischenziele vorgegeben werden, über die die ermittelte Fahrtroute vom Navigationssystem gelegt werden soll. Derartige Zwischenziele können beispielsweise auf einer Kartendarstellung mit einem Cursor als Eingabeeinrichtung ausgewählt werden, wobei die tatsächlich ermittelte Fahrtroute dann durch einen Radius um die Cursorposition führt, je nach dem wie nahe der Cursor an einer tatsächlich befahrbaren Straße positioniert war.

Aus der DE 199 28 295 A1 sind ein Verfahren und eine Vorrichtung zum Bestimmen einer Route von einem Ausgangsort zu einem Zielort bekannt. Dabei wird ein Zwischenziel als Übergangsbereich in Form einer Gruppe von Kanten definiert, wobei bei der Bestimmung der Route der Widerstand der Gesamtroute vom Ausgangsort über alle Zwischenorte bis zum Zielort minimiert wird.

Als nachteilig hierbei ist es anzusehen, dass es bei bekannten Navigationssystemen nicht möglich ist, eine Fahrtroute bereits vorher derart zu ermitteln, dass beispielsweise ein Stau großräumig umfahren werden kann. Hierzu müsste ein Nutzer üblicherweise während der Fahrt des Kraftfahrzeugs ein Zwischenziel eingeben, das möglichst weit weg beispielsweise von einer Störungsstelle des fließenden Verkehrs liegt, um eine tatsächlich Umfahrung zu ermöglichen. Hierdurch könnte er aber in unnötiger Weise vom Verkehrsgeschehen abgelenkt werden.

US-A-2007 0239354 offenbart ein Fahrzeugnavigationssystem, bei dem nach Vorgabe einer Region durch den Benutzer, beispielsweise durch Markieren der Region in einer Kartendarstellung, diese Region von der Routenberechnung ausgenommen wird, so dass die Route nicht über innerhalb der Region liegende Straßenabschnitte führt. Dies wird dadurch erreicht, dass Straßenabschnitten der Region erhöhte Widerstandswerte zugeordnet werden, die mindestens so hoch gewählt werden, dass eine Route um die Region herum die günstigere Route darstellt.

US-A-2004 0111215 zeigt ein ähnliches Navigationssystem. Nach Vorgabe einer "bypass region", deren Lage und Ausdehnung in einer Kartendarstellung ausgewählt werden kann, werden Streckenabschnitte innerhalb der "bypass region" mit erhöhten Gewichten belastet und somit Umgehungsrouten um die "bypass region" erzwungen.

US-B-6 542 812 B1 offenbart ein Navigationssystem, bei dem eine optimale Route von einem Start- zu einem Zielort berechnet wird, wobei Straßenabschnitte oder Flächen durch den Benutzer markiert werden können, die sodann von der Routenberechnung ausgespart werden. Eine Motivation zur Sperrung von Straßenabschnitten sind andauernde oder temporäre, den Verkehrsfluss beeinträchtigende Ereignisse ("road block").

US-B-6 711498 B1 beschreibt ein Navigationssystem, welches bei Erhalt von Verkehrsstörungsmeldungen (via TMC) eine erste Route ohne Berücksichtigung der Verkehrsstörungsmeldungen und eine zweite Route unter Berücksichtigung der Verkehrsstörungsmeldungen berechnet und von diesen beiden Routen die günstigere zur nachfolgenden Zielführung auswählt. Zur Berücksichtigung der Verkehrsstörungsmeldungen werden die den Straßenabschnitten der digitalen Karte zugeordneten Gewichte in Abhängigkeit des Ausmaßes und der Art der gemeldeten Verkehrsstörungen beeinflusst.

Ausgehend von diesem Stand der Technik liegt der Erfindung die Aufgabe zugrunde, ein Navigationssystem der eingangs genannten Art sowie ein entsprechendes Routenberechnungsverfahren zu verbessern

Diese Aufgabe wird durch die in den unabhängigen Ansprüchen angegebenen Merkmale gelöst.

### BESCHREIBUNG DER ERFINDUNG

Der Kerngedanke der Erfindung besteht darin, dass bei einem an sich bekannten Navigationssystem zusätzlich zu der Auswahl, ob beispielsweise Mautstraßen oder dergleichen vermieden werden sollen, es weiterhin möglich ist, ein bestimmtes räumliches Gebiet bei der Ermittlung einer Fahrtroute auszuschließen. Beispielsweise an stark befahrenen Autobahnkreuzen ist es bekannt, dass hier besonders in den Hauptverkehrszeiten immer wieder Staus auftreten. Dies kann bei der Ermittlung der Fahrtroute vom Navigationssystem derart berücksichtigt werden, dass dieses Gebiet mit dem Autobahnkreuz, es kann aber auch eine Innenstadt oder dergleichen sein, überhaupt nicht bei der Ermittlung einer möglichen Fahrtroute zum gewünschten Ziel berücksichtigt wird, so dass dieses Gebiet von der ermittelten Fahrtroute umfahren wird. Es versteht sich, dass das Gebiet vor dem Ermitteln der eigentlichen Fahrtroute dem Navigationssystem vom Nutzer vorgegeben werden kann, wobei seine Gründe für die Meidung dieses Gebiets selbstverständlich beliebig sein können, oder ein solches Gebiet wird erst nachträglich während der aktiven Zielführung zum momentan gewünschten Zielpunkt, eingegeben und nachfolgend wird vom Navigationssystem eine entsprechende Fahrtroute ermittelt.

Der Vorteil der Erfindung besteht darin, dass ein an sich bekanntes Navigationssystem lediglich geringfügig hard- und/oder softwaremäßig verändert werden muss, um durch die Eingabe des zu vermeidenden Gebiets dieses Gebiets bei der Berechnung einer tatsächlichen Fahrtroute zu ignorieren. Mit einem solchen Navigationssystem ist insbesondere der Nutzungskomfort für den Nutzer erhöht, da er besonders die ihm bekannten stauanfälligen Gebiete dem System vorgeben kann und er so vorzugsweise weiträumig auf freien Strecken geführt werden kann. Es versteht sich, dass bei der Ermittlung einer gewünschten Fahrtroute auch mehrere voneinander unabhängige Gebiete ausgeschlossen werden können.

Vorteilhafte Ausgestaltungen der Erfindung sind in den abhängigen Ansprüchen gekennzeichnet.

Gemäß dem Anspruch 2 ist vorgeschlagen, dass ein Gebiet über die Darstellung einer Karte auf einem Display des Navigationssystems ausgewählt werden kann. Es versteht sich, dass die Vergrößerung der Kartendarstellung variabel ist, um das vom Nutzer gewünschte Gebiet in einfacher Weise anwählen zu können. Die Auswahl des Gebiets kann dann durch die Positionierung eines Cursors auf der Karte erfolgen.

In gleicher Weise kann entsprechend dem Anspruch 3 das bei der Ermittlung der Fahrtroute auszuschließende Gebiet über eine Indexierung ausgewählt werden. Beispielsweise kann eine postalische Adresse oder eine Kreuzung, eine komplette Straße, eine Stadt bzw. ein Stadtteil, ein Landkreis, ein Bundesland oder sogar ein gesamtes Land ausgeschlossen werden. Die entsprechende menügeführte Auswahl kann vom Fachmann in an sich bekannter Weise im Navigationssystem realisiert werden.

Erfindungsgemäß besteht die Möglichkeit, ein Gebiet bei der Ermittlung einer Fahrtroute auszuschließen, darin, dass einem Gebiet ein Widerstandswert zugeordnet wird. Durch die Manipulation dieser zugeordneten Widerstandswerte ist es dann möglich, ein solches Gebiet auszuschließen. Dies erfolgt in an sich bekannter Weise mit einem Routenberechnungsalgorithmus beispielsweise nach i-se, dem Bellmann-Ford-Moore- oder dem Dijkstra-Verfahren, die beispielsweise in der DE 10 2006 013 387 A1 bereits angewendet werden. Z.B. kann bei einer auch nur zeitweisen Vollsperrung eines Streckenabschnitts diesem der Widerstandswert "unendlich" zugeordnet oder der Widerstandswert erhöht werden, um eine Berücksichtigung dieses Streckenabschnitts auszuschließen. Erfindungsgemäß können zusätzliche Widerstandswerte, die verschiedenen Streckenabschnitten in einem zu vermeidenden Gebiet zugeordnet sind, mit dem Abstand zum Mittelpunkt dieses Gebiets abnehmen, um ein randseitiges Passieren unter Umständen zu ermöglichen. Schließlich können auch Streckenabschnitte, die in ein zu vermeidendes Gebiet hineinführen, mit einem erhöhten oder unendlichen Widerstandswert belegt werden, so dass vom nachfolgenden Routenberechnungsalgorithmus keine Fahrtstrecke ermittelt wird, die in das betreffende Gebiet hineinführt.

In vorteilhafter Weise kann auch die Größe des auszuschließenden Gebiets vom Nutzer ausgewählt werden. Beispielsweise kann um eine gewünschte Position herum ein Radius von 50km ausgeschlossen werden, falls an diesem Ort eine ansteckende Krankheit ausgebrochen ist und der Nutzer sich nicht in die Nähe dieses Orts begeben möchte. Prinzipiell können hier beliebige Größen vom Nutzer gewählt werden. Es kann aber auch nur eine einzige bestimmte Straße, beispielsweise eine bestimmte Autobahn, ausgeschlossen werden.

Zur Anpassung an das aktuelle Verkehrsgeschehen können Verkehrsstörungen berücksichtigt werden. Informationen über solche Verkehrsstörungen werden z.B. von Radiosendern als standardisierte TMC-Nachrichten versendet. Wird eine solche TMC-Nachricht über einen Stau aufgrund eines Unfalls oder einer Baustelle vom Navigationssystem empfangen, kann eine solche Staustelle in der aktuellen Zielführung umgangen werden, insbesondere wenn vom Navigationssystem auch eine Staulänge mit einer ungefähren durchschnittlichen Standzeit im Stau im Verhältnis zu der längeren Zeitdauer für das Befahren einer Umgehungsstraße berücksichtigt werden kann. Hierzu wird das Gebiet des Staus als zu vermeidendes Gebiet eingeordnet. Vorzugsweise können derartige TMC-Nachrichten auch im Navigationssystem gespeichert werden, so dass nach einem Abschalten und erneuten Aktivieren der Zielführung diese Daten sofort zur Verfügung stehen. In gleicher Weise können Meldungen über Verkehrsstörungen aber auch mit einem Mobiltelefon von einem Dienstanbieter abgerufen oder vom Navigationssystem über eine drahtlose Internetverbindung angefordert werden.

Weiterhin kann auch ein Zeitraum, seit dem die TMC-Meldung empfangen worden ist, berücksichtigt werden, um ein Gebiet von der Routenberechnung auszuschließen. Ereignet sich beispielsweise auf einer Autobahn ein Unfall und wird eine entsprechende TMC-Meldung ausgegeben, so kann üblicherweise davon ausgegangen werden, dass nach einer bestimmten Zeitdauer, besonders bei hohem Verkehrsaufkommen, auch die üblichen Umgehungsstraßen überlastet sind, so dass es auch hier zu einem Stau kommen wird. Dementsprechend wird von dem Navigationssystem eine noch großräumigere Umgehung des anwachsenden Staugebiets ermittelt und entsprechende Fahrtrichtungsangaben an den Nutzer ausgegeben. Die entsprechenden Durchschnittsgrößen für das Anwachsen eines Staus bzw. das Verstopfen von Umgehungsstraßen können beispielsweise durch Verkehrszählungen ermittelt werden.

Ebenso ist es möglich, ein bestimmtes Gebiet nur zeitweise zu sperren. Ist beispielsweise auf einem Baustellenschild angegeben, dass diese Baustelle nur für einen bestimmten Zeitraum eingerichtet ist, so kann diese Information vom Nutzer ins Navigationssystem eingegeben werden, so dass für diesen Zeitraum dieser Baustellenabschnitt bei der Ermittlung einer Fahrtroute nicht berücksichtigt wird. Derartige zeitweise Sperrungen eines Gebiets können auch tageweise erfolgen, falls z.B. Befahren einer Straße am Wochenende verboten ist, oder in Abhängigkeit einer Tageszeit, da unter anderem auf verschiedenen Autobahnabschnitten bei Nacht Geschwindigkeitsbegrenzungen herrschen. Es versteht sich, dass besonders bei längeren Zeiträumen der Sperrung eines Gebiets vom Navigationssystem insbesondere beim Aktivieren einer Zielführung eine Abfrage ausgegeben werden kann, ob die zeitliche Sperrung noch aufrecht erhalten bleiben soll oder gelöscht werden kann.

Schließlich können auch die Art einer Störung, die über die TMC-Nachricht empfangen wird, vom Navigationssystem berücksichtigt werden. Handelt es sich bei einer Baustelle nur um eine einspurige Verkehrsführung kann, auch in Abhängigkeit des zu erwartenden Verkehrsaufkommens und der Tageszeit das Befahren einer weiträumigen Umgehungsstraße dennoch unterbleiben, da zu erwarten ist, dass das gewünschte Ziel über den einspurigen Streckenabschnitt trotzdem schneller erreicht werden kann. Selbstverständlich können derartige Informationen ebenfalls im Navigationssystem dauerhaft abgespeichert werden.

### KURZBESCHREIBUNG DER ZEICHNUNG

Eine Ausführungsform der Erfindung wird nachstehend anhand der Zeichnung näher erläutert. Es zeigt:

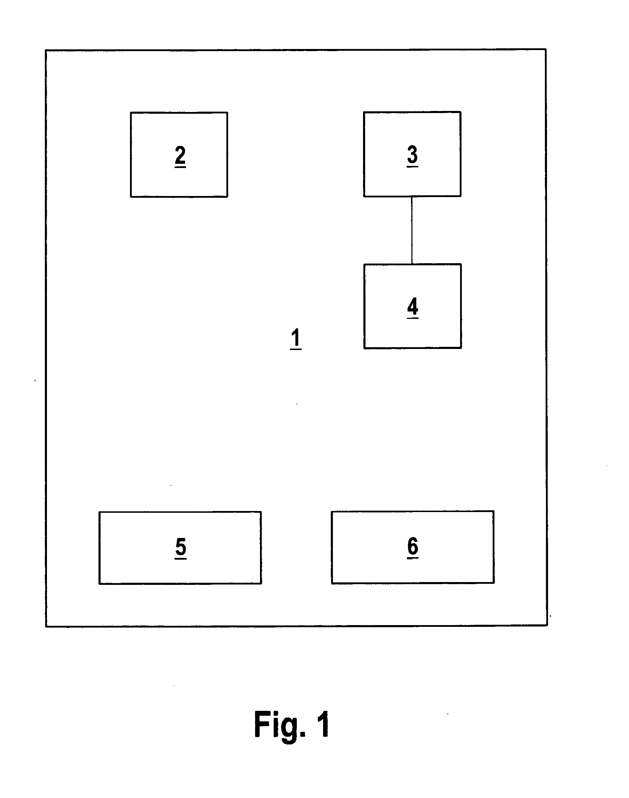

- Fig. 1:: ein Navigationssystem in schematischer Darstellung.

### BESTER WEG ZUR AUSFÜHRUNG DER ERFINDUNG

Aus der schematischen Darstellung in Figur 1 ist ein Navigationssystem 1 ersichtlich, das beispielsweise fest in ein Kraftfahrzeug eingebaut ist oder mobil ausgelegt ist, um von einem Nutzer mitgeführt zu werden. Das Navigationssystem 1 umfasst eine Positionsbestimmungseinrichtung 2, die z.B. über GPS-Signale die tatsächliche Position des Navigationssystems 1 im Raum ermittelt. Ausgehend von dieser Position wird mit Hilfe einer Zielführungseinrichtung 3 eine mögliche Fahrtroute zu einem vom Nutzer vorgegebenen Zielpunkt ermittelt. Dabei greift die Zielführungseinrichtung 3 auf Daten eines Datenspeichers 4 zurück, wie durch die Verbindungslinie angedeutet. Der Datenspeicher 4 ist beispielsweise eine CD-Rom oder eine DVD. Schließlich werden über eine Ausgabeeinrichtung 5 optische und/oder akustische Fahrtrichtungsangaben ausgegeben, so dass der Nutzer über die ermittelte Fahrtroute geführt wird.

An einer Eingabeeinrichtung 6, beispielsweise über eine menügeführte Steuerung auf einem Display des Navigationssystems 1, kann der Nutzer ein gewünschtes Fahrtziel, gegebenenfalls Zwischenziele oder dergleichen sowie weitere Informationen eingeben, z.B. den Ausschluss von Mautstrecken oder dergleichen.

Schließlich kann der Nutzer über die Eingabeeinrichtung 6 auch ein von ihm gewünschtes Gebiet auswählen, das bei der Ermittlung der tatsächlichen Fahrtroute ausgeschlossen werden soll. Hierbei kann es sich um eine Innenstadt handeln, ein bekannter Streckenabschnitt, auf dem es ständig zu Verkehrsstaus kommt oder dergleichen. Zur Auswahl des Gebiets kann der Nutzer entweder über eine Kartendarstellung einen Punkt auswählen oder über eine Indexierung wie eine Adresseingabe das Gebiet festlegen. Selbstverständlich kann der Nutzer auch die Größe, insbesondere den Radius, des zu sperrenden Gebiets, auswählen. Eine solche Sperrung eines Gebiets kann auch über einen vom Nutzer gewünschten Zeitraum erfolgen.

## Patentansprüche

1. Navigationssystem (1) mit einer Eingabevorrichtung (6), wobei ein Gebiet bei der Ermittlung einer Fahrtroute zu einem gewünschten Zielpunkt ausschließbar ist, wozu Streckenabschnitten des zu vermeidenden Gebiets Widerstandwerte zuordenbar sind,
**dadurch gekennzeichnet,**
**dass** die zugeordneten Widerstandswerte mit zunehmendem Abstand vom Mittelpunkt des zu vermeidenden Gebiets abnehmen.

2. Navigationssystem (1) nach Anspruch 1, **dadurch gekennzeichnet, dass** das Gebiet über eine Kartendarstellung auswählbar ist.

3. Navigationssystem (1) nach Anspruch 1, **dadurch gekennzeichnet, dass** das Gebiet über einen Index auswählbar ist.

4. Navigationssystem (1) nach einem der Ansprüche 1 bis 3, **dadurch gekennzeichnet, dass** die Größe des Gebiets festlegbar ist.

5. Navigationssystem (1) nach einem der Ansprüche 1 bis 4, **dadurch gekennzeichnet, dass** bei einer Zielführung Verkehrsstörungen insbesondere über TMC-Nachrichten berücksichtigbar sind und diese vorzugsweise speicherbar sind.

6. Navigationssystem (1) nach einem der Ansprüche 1 bis 5, **dadurch gekennzeichnet, dass** ein zeitlicher Verlauf bei der Zielführung berücksichtbar ist.

7. Navigationssystem (1) nach einem der Ansprüche 1 bis 6, **dadurch gekennzeichnet, dass** ein Gebiet zeitweise sperrbar ist.

8. Navigationssystem (1) nach einem der Ansprüche 1 bis 7, **dadurch gekennzeichnet, dass** eine Art einer Störung des Verkehrsflusses bei der Zielführung berücksichtigbar ist.

9. Verfahren zur Ermittlung einer Route zu einem gewünschten Zielort in einem Navigationssystem, **dadurch gekennzeichnet, dass** ein Gebiet, vorzugsweise durch eine entsprechende Eingabe des Benutzers über eine Eingabevorrichtung, ausgewählt wird und dass das ausgewählte Gebiet bei der Ermittlung der Route ausgeschlossen wird, wozu Streckenabschnitten des zu vermeidenden Gebiets Widerstandwerte zugeordnet werden,
**dadurch gekennzeichnet,**
**dass** die zugeordneten Widerstandswerte mit zunehmendem Abstand vom Mittelpunkt des zu vermeidenden Gebiets abnehmen.

## Claims

1. Navigation system (1) having an input device (6), wherein an area can be excluded from the determination of a route to a desired destination, for which purpose route sections of the area to be avoided can be assigned resistance values, **characterized**
**in that** the assigned resistance values decrease as the distance from the centre point of the area to be avoided increases.

2. Navigation system (1) according to Claim 1, **characterized in that** the area can be selected by means of a map representation.

3. Navigation system (1) according to Claim 1, **characterized in that** the area can be selected by means of an index.

4. Navigation system (1) according to one of Claims 1 to 3, **characterized in that** the size of the area can be defined.

5. Navigation system (1) according to one of Claims 1 to 4, **characterized in that** traffic disruption, in particular relating to TMC messages, can be taken into account in a routing process and said messages can preferably be stored.

6. Navigation system (1) according to one of Claims 1 to 5, **characterized in that** a time profile can be taken into account in the routing process.

7. Navigation system (1) according to one of Claims 1 to 6, **characterized in that** an area can be temporarily blocked off.

8. Navigation system (1) according to one of Claims 1 to 7, **characterized in that** a type of a disruption of the traffic flow can be taken into account in the routing process.

9. Method for determining a route to a desired destination in a navigation system, **characterized in that** an area is selected, preferably by a corresponding input of the user using an input device, and **in that** the selected area is excluded from the determination of the route, for which purpose route sections of the area to be avoided are assigned for resistance values,
**characterized in that** the assigned resistance values decrease as the distance from the centre point of the area to be avoided increases.

## Revendications

1. Système de navigation (1) muni d'un dispositif de saisie (6), une région pouvant être exclue lors de la détermination d'un trajet vers une destination souhaitée, des valeurs de résistance pouvant être associées à cet effet à des portions de trajet de la région à éviter, **caractérisé en ce que** les valeurs de résistance associées diminuent à mesure que la distance du point central de la région à éviter augmente.

2. Système de navigation (1) selon la revendication 1, **caractérisé en ce que** la région peut être sélectionnée par le biais d'une représentation sur une carte.

3. Système de navigation (1) selon la revendication 1, **caractérisé en ce que** la région peut être sélectionnée par le biais d'un index.

4. Système de navigation (1) selon l'une des revendications 1 à 3, **caractérisé en ce que** la taille de la région peut être fixée.

5. Système de navigation (1) selon l'une des revendications 1 à 4, **caractérisé en ce que** lors d'un guidage vers la destination, les perturbations du trafic peuvent être prises en compte, notamment par le biais de messages TMC, et celles-ci peuvent de préférence être mises en mémoire.

6. Système de navigation (1) selon l'une des revendications 1 à 5, **caractérisé en ce qu'**un déroulement dans le temps peut être pris en compte lors du guidage vers la destination.

7. Système de navigation (1) selon l'une des revendications 1 à 6, **caractérisé en ce qu'**une région peut être bloquée temporairement.

8. Système de navigation (1) selon l'une des revendications 1 à 7, **caractérisé en ce qu'**une nature d'une perturbation du flux de trafic peut être prise en compte lors du guidage vers la destination.

9. Procédé de détermination d'un trajet vers une destination souhaitée dans un système de navigation, **caractérisé en ce qu'**une région est sélectionnée, de préférence par une saisie en conséquence de l'utilisateur par le biais d'un dispositif de saisie, et **en ce que** la région sélectionnée est exclue lors de la détermination du trajet, des valeurs de résistance étant associées à cet effet à des portions de trajet de la région à éviter, **caractérisé en ce que** les valeurs de résistance associées diminuent à mesure que la distance du point central de la région à éviter augmente.
